(19) Europäisches Patentamt
European Patent Office
Office européen des brevets

(11) EP 3 465 965 B1

(12) **EUROPEAN PATENT SPECIFICATION**

(45) Date of publication and mention of the grant of the patent:
**01.09.2021 Bulletin 2021/35**

(21) Application number: **16727177.4**

(22) Date of filing: **02.06.2016**

(51) Int Cl.:
***H04L 1/18*** *(2006.01)* ***H04L 29/06*** *(2006.01)*
***H04L 1/08*** *(2006.01)* ***H04L 1/22*** *(2006.01)*
***H04B 7/022*** *(2017.01)* ***H04L 1/00*** *(2006.01)*

(86) International application number:
**PCT/EP2016/062486**

(87) International publication number:
**WO 2017/207052 (07.12.2017 Gazette 2017/49)**

(54) **APPARATUS AND METHOD FOR RELIABLE COMMUNICATION IN MULTI-CONNECTIVITY**

VORRICHTUNG UND VERFAHREN ZUR VERLÄSSLICHEN KOMMUNIKATION IN EINER MULTIKONNEKTIVITÄT

APPAREIL ET PROCÉDÉ DESTINÉS À UNE COMMUNICATION FIABLE EN CONNECTIVITÉ MULTIPLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.04.2019 Bulletin 2019/15**

(73) Proprietor: **Nokia Solutions and Networks Oy**
**02610 Espoo (FI)**

(72) Inventors:
- **VIERING, Ingo**
  **81549 Munich (DE)**
- **MICHALOPOULOS, Diomidis**
  **81541 Munich (DE)**
- **MAEDER, Andreas**
  **97074 Würzburg (DE)**

(74) Representative: **Nokia EPO representatives**
**Nokia Technologies Oy**
**Karakaari 7**
**02610 Espoo (FI)**

(56) References cited:
**US-A1- 2008 117 877 US-A1- 2011 075 611**
**US-A1- 2015 003 330**

- **RESEARCH IN MOTION UK LIMITED: "Joint PDCP protocols on Uu and Un interfaces to improve type-I relay handover", 3GPP DRAFT; R2-093735, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090622, 22 June 2009 (2009-06-22), XP050351968, [retrieved on 2009-06-22]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 465 965 B1

## Description

### Technical Field

The exemplary and non-limiting embodiments of the invention relate generally to communications.

### Background

The following description of background art may include insights, discoveries, understandings or disclosures, or associations together with disclosures not known to the relevant art prior to the present invention but provided by the invention. Some of such contributions of the invention may be specifically pointed out below, whereas other such contributions of the invention will be apparent from their context.

In communication systems, connections between communicating parties were in the past single connections. Recently, multi-connectivity has been the object of increasing research. This applies especially to wireless communication systems comprising user terminals in cells served by base stations or the like. In multi-connectivity, a communicating party such as a user terminal is not connected only to a single cell on a single frequency layer, but simultaneously to multiple cells on different frequency layers or even different, not necessarily co-sited radio interfaces.

Current LTE (long term evolution) supports dual-connectivity (and carrier aggregation) where a user terminal can be connected to multiple cells of two different base stations. 5th generation mobile networks (5G for short) which are currently being developed will likely provide even more options for multi-connectivity. User terminals may not only be able to connect to different base stations on different carrier frequencies, but also to base stations on different radio interfaces (such as LTE+cmW, cmW+mmW, for example).

Ultra-reliable communication is another topic which is becoming more and more relevant. There will be more and more use cases which require an extremely small packet loss rate, and at the same time have a tight delay budget which does not allow for many retransmissions. A prominent example of such use cases is autonomous driving, vehicular safety in general, and industrial communication. Multi-connectivity has been seen as a solution for providing reliable communication links.

Processing data packets which are transmitted through more than one transmission link presents challenges as fast and reliable transmission of data is of importance in many applications.

3GPP TDoc R2-093735, published on 22 June 2009, describes acknowledgement of PDUs in a relay network.

### Brief description

According to an aspect of the present invention, there is provided an apparatus of claim 1.

According to an aspect of the present invention, there is provided a method of claim 5.

One or more examples of implementations are set forth in more detail in the accompanying drawings and the description below. Other features will be apparent from the description and drawings, and from the claims.

### Brief description of the drawings

In the following the invention will be described in greater detail by means of preferred embodiments with reference to the accompanying drawings, in which

Figure 1 illustrates an example of a communication system;
Figure 2 illustrates another example;
Figures 3 and 4 are flowcharts illustrating embodiments of the invention;
Figures 5A, 5B, 5C and 6 illustrate simplified examples of apparatuses applying some embodiments of the invention.

### Detailed description of some embodiments

Embodiments are applicable to any base station, communication network element, user equipment (UE), user terminal (UT), server, corresponding component, and/or to any communication system or any combination of different communication systems that support required functionalities.

The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, embodiments.

Many different radio protocols to be used in communications systems exist. Some examples of different communication systems are the universal mobile telecommunications system (UMTS) radio access network (UTRAN), long term evolution (LTE, known also as E-UTRA), long term evolution advanced (LTE-A), 5th generation mobile networks, Wireless Local Area Network (WLAN) based on IEEE 802.11 standard, worldwide interoperability for microwave access (WiMAX), Bluetooth®, personal communications services (PCS) and systems using ultra-wideband (UWB) technology. IEEE refers to the Institute of Electrical and Electronics Engineers.

Figure 1 illustrates an example of a communication system where some embodiments of the invention may be applied. The example of Figure 1 follows 5G terminology, but the embodiments of the invention are not limited to 5G but may be applied also in other systems supporting dual or multi-connectivity.

5G system is currently being developed. It is likely to use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates. 5G will likely be comprised of more than one radio interfaces (RI), each optimized for certain use cases and/or spectrum. 5G mobile communications will have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also can be integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

In the example of Figure 1, a user terminal 100 is simultaneously connected 102, 104 to two base stations 106, 108. The base stations may be, for instance, a macro cell 106 and a small cell 108. The small cell 108 has its own baseband, i.e. it is not a remote radio head of the macro base station 106.

Furthermore, the base stations are connected 110 to a central network element called a multi-node controller MNC 112. The interface 110 between MNC and BS may be called Fh ("fronthaul"). The base stations may be connected to each other through an interface 118, which may be an X2 interface.

In an embodiment, the MNC runs a centralized network convergence layer NCS. The NCS has similar functions (header compression, cryptography, distributing the packets for multi-/dual connectivity) as Packet Data Convergence Protocol PDCP in LTE systems.

The NCS in MNC 112 communicates with a Radio Convergence Sublayer RCS layer in the base stations 106, 108. The RCS has similar functionality as Radio Link Control Layer RLC in LTE systems. Thus, it segments/concatenates the Packet Data Convergence Protocol Packet Data Unit PDCP PDUs in Radio Link Control Layer Packet Data Unit RLC Service Data Units SDUs and performs ARQ (Automatic Repeat-reQuest). The Media Access Control MAC has same functionality as in LTE, it runs fast hybrid ARQ and allocates RCS PDUs to transport blocks (with a potential re-segmentation of re-transmitted RLC PDU). The base stations further comprise physical layers PHY and radio frequency section RF.

User terminal comprises similar logical layers as the base stations, but they are not shown in Figure 1, for simplicity.

In the example of Figure 1, an application requiring reliable or ultra-reliable service has produced five packets (IP packets, for example) 114 and the NCS entity of the MNC 112 decides to duplicate the packets on the two available links provided by base stations 106, 108. Let us now assume that the macro link 102 is stronger than the small cell link 104. This means it has a better channel quality and thus may provide larger throughput. Let us further assume that the first four packets 116 pass the strong link quickly and successfully, but the fifth packet is lost.

It may be noted that such a loss is not very likely with the conventional configuration of adaptive modulation and coding, Hybrid ARQ and ARQ. However, the low latency requirement may not allow a large number of retransmissions which makes those losses more likely.

In the situation illustrated in Figure 1, when packet #5 is lost on the macro base station link 102, the small cell link 104 is still busy with packet #2 due to the smaller throughput of the link. It will take a lot of time until the transmission of the problematic packet #5 even starts on the link 104. It may be noted that the base station 108 is not aware that packets #1 - #4 have already been received successfully.

A related problem may occur with larger bursts (containing more than five packets as in the example of Figure 1). A flow control is utilised between MNC and each base station which ensures that the buffers in the base stations do not overflow. With packet duplication it is not obvious which of the buffers should be observed by the flow control. If the flow control takes care that no buffer is allowed to overflow, then the resulting throughput is the throughput of the weakest link which is obviously not desired. On the other hand, if the flow control takes care that no buffer runs empty, then it would overflow the buffer of weak links (since those are still busy when the strongest link is empty).

Even if the links have a similar quality, we may not get the expected robustness. Figure 2 illustrates another example where links 102 and 104 have similar quality and similar throughput. However, here we assume that the small cell link 104 has previously lost NCS PDU #4. Since the receiving RCS in the terminal 100 has to provide in-sequence delivery of the RCS segments, it will not deliver any RCS segment to NCS of the terminal before all RCS segments of NCS PDU #4 have been successfully received. So RCS re-ordering is also blocking the expected macro diversity gain.

In view of the above, there are obvious problems to achieve the benefits of duplication. In an embodiment, where a communication system utilises multiple links (e.g. different frequencies, different radio interfaces) between network and user terminal for improving reliability and where information is duplicated on the available multiple links, the transmit buffers of the individual links may be kept synchronous in such a manner that information which has been successfully transmitted on one leg is discarded on the other links. Thus, the base stations should stop transmitting any RCS or MAC PDUs segmented (or concatenated) from NCS-PDUs which have been successfully received by the user terminal via another link. This may be accomplished by flushing the ARQ and HARQ buffers in the RCS and MAC layers of the base stations, respectively.

Figure 3 is a flowchart illustrating an embodiment of the invention. The Figure illustrates an example of the operation of an apparatus or a network element such as base station or a part of a base station. The steps of the flowchart may also be in different order than illustrated in Figure 3.

In step 302, the base station is configured to receive from a central network element data packets to be transmitted to a user terminal. The central network element may be the MNC 112, for example.

In step 304, the base station is configured to maintain one or more transmit buffers for transmitting data packets to the user terminal. The buffers may be the ARQ and HARQ buffers in the RCS and MAC layers of the base station, respectively.

In step 306, the base station is configured to transmit data packets to a user terminal.

In step 308, the base station is configured to receive information from the user terminal regarding whether one or more data packets are successfully or not successfully received. The information may be received in the form of ACK/NACK signaling, for example.

In step 310, the base station is configured on the basis of received information to transmit acknowledgement information to another network element of the communication system. The network element may be the central network element such as the MNC or it may be another base station as will be explained below.

In step 312, the base station is configured to receive a notification that one or more packets have been successfully transmitted to the user terminal from a second corresponding apparatus. The second corresponding apparatus may be another base station, for example. The notification may come from the user terminal, from the other base station or from the central network element as will be explained below.

If the one or more transmit buffers comprise the packets which were successfully transmitted by the second corresponding apparatus, the base station is configured in step 314 to remove the packets from the buffers.

Figure 4 is a flowchart illustrating an embodiment of the invention. The Figure illustrates an example of the operation of an apparatus or a network element such as a multi-node controller MNC 112 or a part of an MNC. The steps of the flowchart may also be in different order than illustrated in Figure 4.

In step 402, the apparatus is configured to receive from network data packets to be transmitted to a user terminal. The data may originate from an application running in the network and requiring reliable or ultra-reliable service.

In step 404, the apparatus is configured to transmit the data packets to at least two base station apparatuses for transmitting data packets to the user terminal. The base stations may use different frequencies and/or different radio interfaces, for example.

In step 406, the apparatus is configured to receive information from a base station apparatus whether data packets are successfully or not successfully received.

In step 408, the apparatus is configured to transmit the information to the other base station apparatuses configured to transmit the same data.

As explained, user terminals transmit ACK/NACK regarding each received packet to the transmitting base station. Base stations are configured to transmit the ACK/NACK information to the NCS layer in the MNC.

In an embodiment, the NCS layer in the MNC is configured to inform the base stations or RCS layer in the base stations about the NCS PDUs which have been successfully transmitted to the user terminal.

Referring to the example of Figure 1, initially the RCS in the base station 106 will detect that an NCS-PDU has been successfully received by the user terminal 100. The RCS of the base station informs the NCS of the MNC. The same procedure is already part of the dual connectivity solution in LTE.

As mentioned above, in an embodiment, the NCS of the MNC transmits the information further to the base station 108. In general, this was not needed in prior solutions and, furthermore, the flow of such an ACK is against the intuitive direction - typically ACKs are sent towards the data source (i.e. against the data flow), and here the ACK is sent towards the data sink (i.e. in the same direction as the data flow).

In response to the received information, the base station is configured to determine whether a copy of the data packets which have been successfully transmitted by another base station (or segments thereof) is in its own transmission buffers. If so, the transmission buffers in RCS (ARQ) and MAC (HARQ) are flushed. Otherwise, in the example of Figure 1 above the RCS and MAC would unnecessarily continue transmitting the rest of packet #2. Instead, it may start transmitting the problematic packet #5.

In another embodiment, where the architecture is a distributed one without a centralized MNC (as in today's LTE), the base stations may transmit the ACK/NACK information directly to other base stations. In the example of Figure 1 base station 106 transmits ACK/NACK information to base station 108 and vice versa. The transmission may utilise the X2 interface 118.

Equivalently, the RCS and MAC buffers in base station 108 may be flushed when the corresponding ACK/NACK information is received from other base stations, e.g. 106.

In another embodiment, when user terminal receives successfully an NCS PDU, it may send an acknowledgement about the successfully received NCS PDU to all links. In the example of Figure 1 the ACK is transmitted to both base stations regardless which base station transmitted the packet. Such a signalling of NCS ACKs (or, in LTE terminology, PDCP ACKs) does not exist today, and it is typically not needed except when duplication is applied like in the case of Figure 1.

Based on the proposed transmission method, regardless of whether the NCS ACKs are sent by the user terminal, by another base station, or by a central network element, there is certainly a trade-off regarding overhead. That is, the more frequently the NCS ACKs are sent, the more overhead is introduced to the system (on the air interface, on X2 interface or on Fh interface). On the other hand, the less frequently they are sent, the more risky it is, in the sense that the other link may still be busy with older packets which have already been received in the meantime, or is still waiting for segments of a packet which has already been received in the meantime, but not acknowledged.

The most intuitive and simple approach is that an individual NCS ACK is sent for every NCS PDU which has been acknowledged.

Alternatively, if the overhead becomes critical, several NCS ACKs could be collected and sent as a "bulk" or group. This obviously saves some signalling, but also does not solve the problem as efficiently as the above approach.

Let us assume that the links are not equal, i.e, one link is stronger than the other. This means it has a better channel quality and thus may provide larger throughput. As a simple approximation, we can assume that the weak link is x times weaker, i.e. x is the throughput ratio:

$$x = \text{throughput_strong}/\text{throughput_weak}.$$

If a "bulk" or group NCS ACKs are sent every $t_0$, where $t_0$ is a given time instant, then it may take up to $x*t_0$ until the weaker link has transmitted the "old" packets (regarding which ACK has not been received) and starts the packet which is lost on the other link.

It may be noted that possible latency on the X2 interface or other interface will add to this delay.

In an embodiment, the acknowledgements may also be triggered by configurable thresholds for the buffer sizes of the flow control protocol between RCS and NCS, or by the buffer size of the RCS segmentation/Quality of Service queue. These thresholds may be selected at least in part based on overall latency constraints between user terminal and the NCS layer.

In an embodiment, the base stations are configured to transmit information to the user terminal about the removal of the packets from the transmission buffers. This may be needed so that the user terminal does not keep on waiting for retransmissions. Furthermore, the user terminal has to stop the re-ordering in its RCS layer, otherwise it would deliver (the segments of) packet #5 to its NCS layer before having successfully received (the segments of) packet #2, 3 and 4, for example.

Figure 5A illustrates an embodiment. The figure illustrates a simplified example of an apparatus applying embodiments of the invention. In some embodiments, the apparatus may be a base station or a part of a base station.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 500 configured to control at least part of the operation of the apparatus.

The apparatus may comprise a memory 502 for storing data. Furthermore the memory may store software 504 executable by the control circuitry 400. The memory may be integrated in the control circuitry.

The apparatus comprises a transceiver 506. The transceiver is operationally connected to the control circuitry 500. It may be connected to an antenna arrangement (not shown).

The apparatus may further comprise interface circuitry 508 configured to connect the apparatus to other devices and network elements of communication system, for example to other corresponding apparatuses and a central network element such as MNC. The interface may provide a wired or wireless connection to the communication network.

The software 504 may comprise a computer program comprising program code means adapted to cause the control circuitry 500 of the apparatus to receive from a network element data packets to be transmitted to a user terminal; maintain one or more transmit buffers for transmitting data packets to the user terminal; transmit data packets to a user terminal; receive information from the user terminal regarding whether one or more data packets are successfully or not successfully received; transmit on the basis of received information acknowledgement information to another network element of the communication system; receive a notification that one or more packets have been successfully transmitted to the user terminal from a second corresponding apparatus; and if the one or more transmit buffers comprise the successfully transmitted packets, remove the packets from the buffers.

Figure 5B illustrates an embodiment. The figure illustrates a simplified example of an apparatus applying embodiments of the invention. In some embodiments, the apparatus may be a central network element such as MNC or a part of such an element.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 520 configured to control at least part of the operation of the apparatus.

The apparatus may comprise a memory 522 for storing data. Furthermore the memory may store software 524 executable by the control circuitry 500. The memory may be integrated in the control circuitry.

The apparatus may further comprise one or more interface circuitries 526 configured to connect the apparatus to other devices and network elements of communication system, for example to other corresponding apparatuses and a central network element such as MNC. The interface may provide a wired or wireless connection to the communication network.

The software 524 may comprise a computer program comprising program code means adapted to cause the control circuitry 520 of the apparatus to receive from network data packets to be transmitted to a user terminal; transmit the data packets to at least two base station apparatuses for transmitting data packets to the user terminal; receive information from a base station apparatus whether data packets are successfully or not successfully received and transmit the information to the other base station apparatuses.

Figure 5C illustrates an embodiment. The figure illustrates a simplified example of an apparatus applying embodiments of the invention. In some embodiments, the apparatus may be a user terminal or user equipment or a part of a user terminal.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 530 configured to control at least part of the operation of the apparatus.

The apparatus may comprise a memory 532 for storing data. Furthermore the memory may store software 534 executable by the control circuitry 400. The memory may be integrated in the control circuitry.

The apparatus comprises a transceiver 536. The transceiver is operationally connected to the control circuitry 530. It may be connected to an antenna arrangement (not shown).

The software 534 may comprise a computer program comprising program code means adapted to cause the control circuitry 530 of the apparatus to maintain connection with more than one base stations; receive same data packets from the more than one base stations; transmit acknowledgement of each data packet to the all the base stations and receive from at least one base station information about the removal of the packets from buffers maintained by the at least one base station.

In an embodiment, as shown in Figure 6, at least some of the functionalities of the apparatus of Figure 5A may be shared between two physically separate devices, forming one operational entity. Therefore, the apparatus may be seen to depict the operational entity comprising one or more physically separate devices for executing at least some of the described processes. Thus, the apparatus of Figure 6, utilizing such shared architecture, may comprise a remote control unit RCU 600, such as a host computer or a server computer, operatively coupled (e.g. via a wireless or wired network) to a remote radio head RRH 602 located in the base station. In an embodiment, at least some of the described processes may be performed by the RCU 600. In an embodiment, the execution of at least some of the described processes may be shared among the RRH 602 and the RCU 600.

In an embodiment, the RCU 600 may generate a virtual network through which the RCU 600 communicates with the RRH 602. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the RCU). External network virtualization is targeted to optimized network sharing. Another category is internal virtual networking which provides network-like functionality to the software containers on a single system. Virtual networking may also be used for testing the terminal device.

In an embodiment, the virtual network may provide flexible distribution of operations between the RRH and the RCU. In practice, any digital signal processing task may be performed in either the RRH or the RCU and the boundary where the responsibility is shifted between the RRH and the RCU may be selected according to implementation.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, which may comprise a working memory (RAM), a central processing unit (CPU), and a system clock. The CPU may comprise a set of registers, an arithmetic logic unit, and a controller. The controller is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst a number of computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

The invention is defined by the appended claims.

## Claims

1. An apparatus of a first base station in a communication system, the apparatus comprising:

   at least one processor; and
   at least one memory including computer program code,
   the at least one memory and the computer program code configured to, with the at least one processor, cause the apparatus at least to:

      receive from a multi-node controller data packets to be transmitted to a user terminal;
      maintain one or more transmit buffers for transmitting the data packets to the user terminal;
      transmit the data packets to the user terminal;
      receive information from the user terminal regarding whether one or more of the data packets are successfully or not successfully received;
      transmit, to a second base station or to the multi-node controller, acknowledgement information, on the basis of the received information ;
      **characterised by** further causing the apparatus to:

         receive a notification, from the second base station or from the multi-node controller, that one or more data packets have been successfully transmitted to the user terminal from the second base station; and
         if the one or more transmit buffers comprise the successfully transmitted data packets, remove these data packets from the one or more transmit buffers.

2. The apparatus of claim 1, the at least one memory and the computer program code configured to, with the at least one processor, cause the apparatus further to:
   transmit information to the user terminal about the removal of the packets from the one or more transmit buffers.

3. The apparatus of claim 1 or 2, the at least one memory and the computer program code configured to, with the at least one processor, cause the apparatus to:
transmit the acknowledgement information at predetermined time intervals.

4. The apparatus of any preceding claim, the at least one memory and the computer program code configured to, with the at least one processor, cause the apparatus to:
transmit the acknowledgement information when the number of data packets in the one or more transmit buffers exceeds a given threshold.

5. A method performed by a first base station in a communication system, the method comprising:

receiving from a multi-node controller data packets to be transmitted to a user terminal;
maintaining one or more transmit buffers for transmitting the data packets to the user terminal;
transmitting the data packets to the user terminal;
receiving information from the user terminal regarding whether one or more of the data packets are successfully or not successfully received;
transmitting, to a second base station or to the multi-node controller, acknowledgement information on the basis of the received information;
**characterised by**
receiving a notification, from the second base station or from the multi-node controller, that one or more data packets have been successfully transmitted to the user terminal from the second base station; and
if the one or more transmit buffers comprise the successfully transmitted data packets, removing these data packets from the one or more transmit buffers.

6. The method of claim 5, further comprising:

transmitting information to the user terminal about the removal of the packets from the one or more transmit buffers.

7. The method of claim 5 or 6, comprising:
transmitting the acknowledgement information at predetermined time intervals.

8. The method of any preceding claim 5 to 7, comprising:
transmitting the acknowledgement information when the number of data packets in the one or more transmit buffers exceeds a given threshold.

**Patentansprüche**

1. Vorrichtung einer ersten Basisstation in einem Kommunikationssystem, wobei die Vorrichtung Folgendes umfasst:

mindestens einen Prozessor und
mindestens einen Speicher, der einen Computerprogrammcode beinhaltet,
wobei der mindestens eine Speicher und der Computerprogrammcode dazu ausgelegt sind, die Vorrichtung mit dem mindestens einen Prozessor mindestens zu Folgendem zu veranlassen:

Empfangen von Datenpaketen, die zu einem Benutzerendgerät zu übertragen sind, von einer Mehrknotensteuerung;
Unterhalten von einem oder mehreren Übertragungspuffern zum Übertragen der Datenpakete zum Benutzerendgerät;
Übertragen der Datenpakete zum Benutzerendgerät;
Empfangen von Informationen darüber, ob eines oder mehrere der Datenpakete erfolgreich oder erfolglos empfangen wurden, vom Benutzerendgerät;
Übertragen von Bestätigungsinformationen auf Basis der empfangenen Informationen zu einer zweiten Basisstation oder zur Mehrknotensteuerung;
**dadurch gekennzeichnet, dass** die Vorrichtung ferner zu Folgendem veranlasst wird:

Empfangen einer Benachrichtigung, dass ein oder mehrere Datenpakete von der zweiten Basisstation erfolgreich zum Benutzerendgerät übertragen wurden, von der zweiten Basisstation oder der Mehrknotensteuerung und
wenn der eine oder die mehreren Übertragungspuffer die erfolgreich übertragenen Datenpakete umfassen, Entfernen dieser Datenpakete aus dem einen oder den mehreren Übertragungspuffern.

2. Vorrichtung nach Anspruch 1, wobei der mindestens eine Speicher und der Computerprogrammcode dazu ausgelegt sind, mit dem mindestens einen Prozessor die Vorrichtung ferner zu Folgendem zu veranlassen:
Übertragen von Informationen über die Entfernung der Pakete aus dem einen oder den mehreren Übertragungspuffern zum Benutzerendgerät.

**3.** Vorrichtung nach Anspruch 1 oder 2, wobei der mindestens eine Speicher und der Computerprogrammcode dazu ausgelegt sind, mit dem mindestens einen Prozessor die Vorrichtung zu Folgendem zu veranlassen:
Übertragen der Bestätigungsinformationen in vorbestimmten Zeitintervallen.

**4.** Vorrichtung nach einem der vorhergehenden Ansprüche, wobei der mindestens eine Speicher und der Computerprogrammcode dazu ausgelegt sind, mit dem mindestens einen Prozessor die Vorrichtung zu Folgendem zu veranlassen:

Übertragen der Bestätigungsinformationen, wenn die Anzahl von Datenpaketen in dem einen oder den mehreren Übertragungspuffern einen gegebenen Schwellwert überschreitet.

**5.** Verfahren, das von einer ersten Basisstation in einem Kommunikationssystem durchgeführt wird, wobei das Verfahren Folgendes umfasst:

Empfangen von Datenpaketen, die zu einem Benutzerendgerät zu übertragen sind, von einer Mehrknotensteuerung;
Unterhalten von einem oder mehreren Übertragungspuffern zum Übertragen der Datenpakete zum Benutzerendgerät;
Übertragen der Datenpakete zum Benutzerendgerät;
Empfangen von Informationen darüber, ob eines oder mehrere der Datenpakete erfolgreich oder erfolglos empfangen wurden, vom Benutzerendgerät;
Übertragen von Bestätigungsinformationen auf Basis der empfangenen Informationen zu einer zweiten Basisstation oder zur Mehrknotensteuerung;
**gekennzeichnet durch**
Empfangen einer Benachrichtigung, dass ein oder mehrere Datenpakete von der zweiten Basisstation erfolgreich zum Benutzerendgerät übertragen wurden, von der zweiten Basisstation oder der Mehrknotensteuerung und
wenn der eine oder die mehreren Übertragungspuffer die erfolgreich übertragenen Datenpakete umfassen, Entfernen dieser Datenpakete aus dem einen oder den mehreren Übertragungspuffern.

**6.** Verfahren nach Anspruch 5, das ferner Folgendes umfasst:

Übertragen von Informationen über die Entfernung der Pakete aus dem einen oder den mehreren Übertragungspuffern zum Benutzerendgerät.

**7.** Verfahren nach Anspruch 5 oder 6, das Folgendes umfasst:

Übertragen der Bestätigungsinformationen in vorbestimmten Zeitintervallen.

**8.** Verfahren nach einem der vorhergehenden Ansprüche 5 bis 7, das Folgendes umfasst:
Übertragen der Bestätigungsinformationen, wenn die Anzahl von Datenpaketen in dem einen oder den mehreren Übertragungspuffern einen gegebenen Schwellwert überschreitet.

## Revendications

**1.** Appareil d'une première station de base dans un système de communication, l'appareil comprenant :

au moins un processeur ; et
au moins une mémoire comportant un code de programme informatique,
l'au moins une mémoire et le code de programme informatique étant configurés pour, avec l'au moins un processeur, amener l'appareil au moins à :

recevoir, à partir d'un dispositif de commande à nœuds multiples, des paquets de données à transmettre à un terminal utilisateur ;
maintenir un ou plusieurs tampons de transmission pour transmettre les paquets de données au terminal utilisateur ;
transmettre les paquets de données au terminal utilisateur ;
recevoir des informations, à partir du terminal utilisateur, précisant le succès ou non de la réception des un ou plusieurs des paquets de données ;
transmettre, à une deuxième station de base ou au dispositif de commande à nœuds multiples, des informations d'accusé de réception, sur la base des informations reçues ;
**caractérisé en outre en ce que** l'appareil est amené à :

recevoir une notification, à partir de la deuxième station de base ou à partir du dispositif de commande à nœuds multiples, indiquant qu'un ou plusieurs paquets de données ont été transmis avec succès au terminal utilisateur à partir de la deuxième station de base ; et
si les un ou plusieurs tampons de transmission comprennent les paquets de données transmis avec succès, retirer ces paquets de données des un ou plusieurs tampons de transmission.

**2.** Appareil selon la revendication 1, où l'au moins une mémoire et le code de programme informatique sont configurés pour, avec l'au moins un processeur, amener l'appareil en outre à :
transmettre des informations au terminal utilisateur concernant le retrait des paquets des un ou plusieurs tampons de transmission.

**3.** Appareil selon la revendication 1 ou 2, où l'au moins une mémoire et le code de programme informatique sont configurés pour, avec l'au moins un processeur, amener l'appareil à :
transmettre les informations d'accusé de réception à des intervalles de temps prédéterminés.

**4.** Appareil selon l'une quelconque des revendications précédentes, où l'au moins une mémoire et le code de programme informatique sont configurés pour, avec l'au moins un processeur, amener l'appareil à :
transmettre les informations d'accusé de réception lorsque le nombre de paquets de données dans les un ou plusieurs tampons de transmission dépasse un seuil donné.

**5.** Procédé réalisé par une première station de base dans un système de communication, le procédé comprenant :

la réception, à partir d'un dispositif de commande à nœuds multiples, de paquets de données à transmettre à un terminal utilisateur ;
le maintien d'un ou plusieurs tampons de transmission pour transmettre les paquets de données au terminal utilisateur ;
la transmission des paquets de données au terminal utilisateur ;
la réception d'informations, à partir du terminal utilisateur, précisant le succès ou non de la réception des un ou plusieurs des paquets de données ;
la transmission, à une deuxième station de base ou au dispositif de commande à nœuds multiples, des informations d'accusé de réception sur la base des informations reçues ;
**caractérisé par**
la réception d'une notification, à partir de la deuxième station de base ou à partir du dispositif de commande à nœuds multiples, indiquant qu'un ou plusieurs paquets de données ont été transmis avec succès au terminal utilisateur à partir de la deuxième station de base ; et
si les un ou plusieurs tampons de transmission comprennent les paquets de données transmis avec succès, le retrait de ces paquets de données des un ou plusieurs tampons de transmission.

**6.** Procédé selon la revendication 5, comprenant en outre :
la transmission d'informations au terminal utilisateur concernant le retrait des paquets des un ou plusieurs tampons de transmission.

**7.** Procédé selon la revendication 5 ou 6, comprenant :
la transmission des informations d'accusé de réception à des intervalles de temps prédéterminés.

**8.** Procédé selon l'une quelconque des revendications précédentes 5 à 7, comprenant :
la transmission des informations d'accusé de réception lorsque le nombre de paquets de données dans les un ou plusieurs tampons de transmission dépasse un seuil donné.

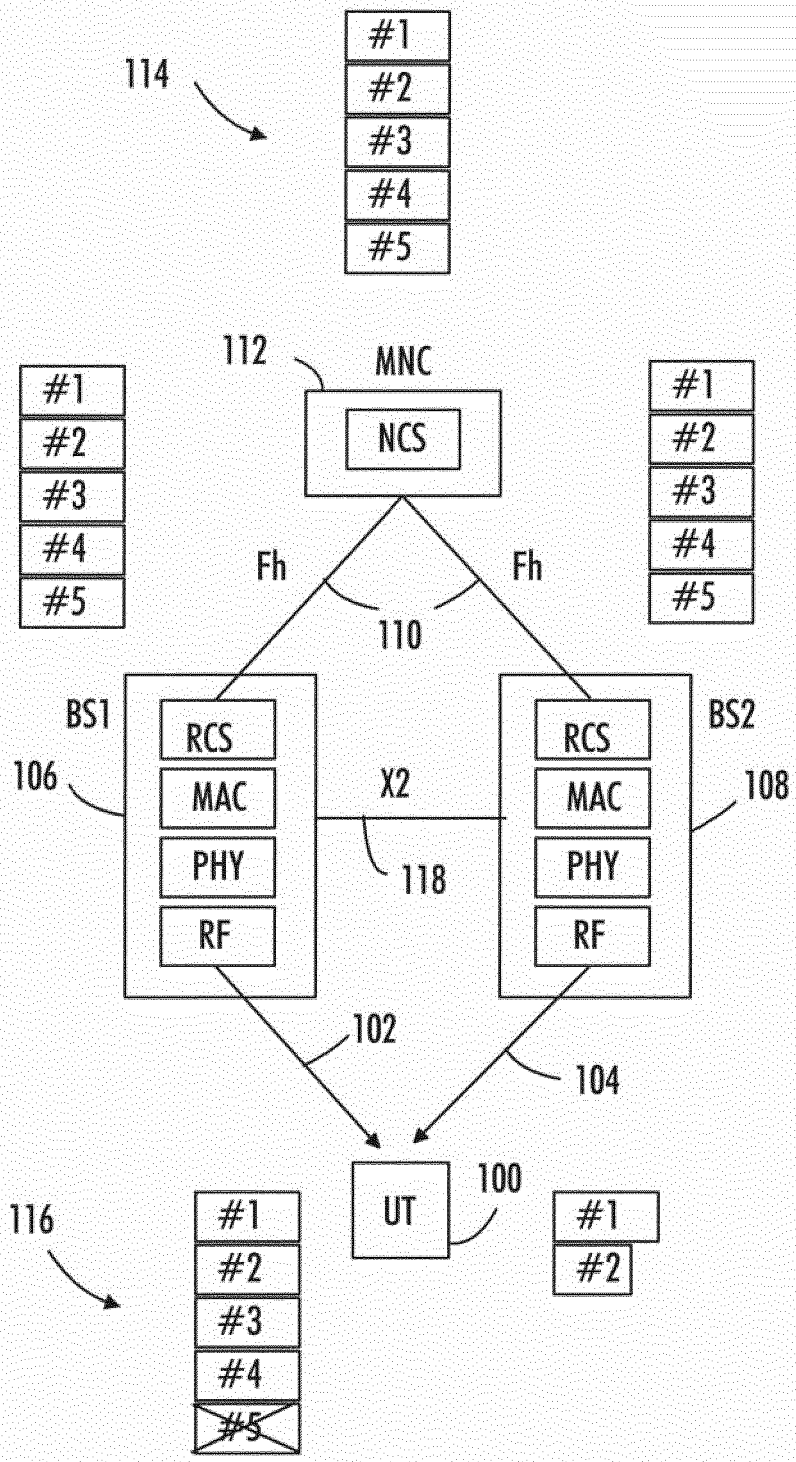
114
#1
#2
#3
#4
#5
112
MNC
NCS
#1
#2
#3
#4
#5
#1
#2
#3
#4
#5
Fh
Fh
110
BS1
BS2
RCS
MAC
PHY
RF
RCS
MAC
PHY
RF
106
X2
108
118
102
104
UT
100
116
#1
#2
#3
#4
#5
#1
#2

FIG. 1

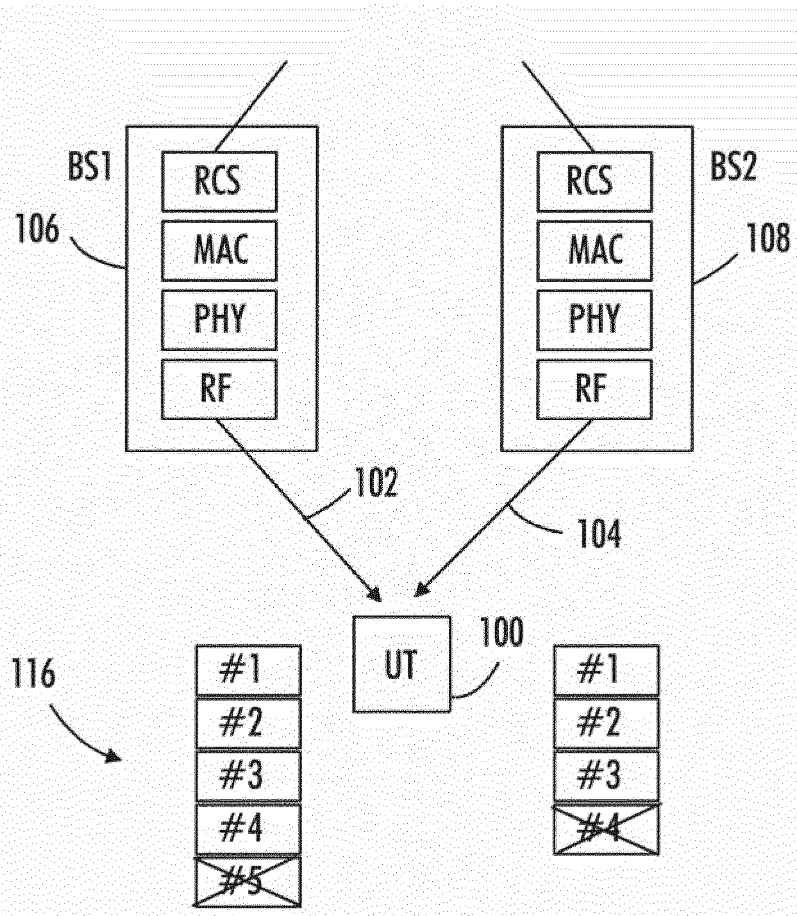
BS1
RCS
MAC
PHY
RF
106
BS2
RCS
MAC
PHY
RF
108
102
104
UT
100
116
#1
#2
#3
#4
#5
#1
#2
#3
#4

FIG. 2

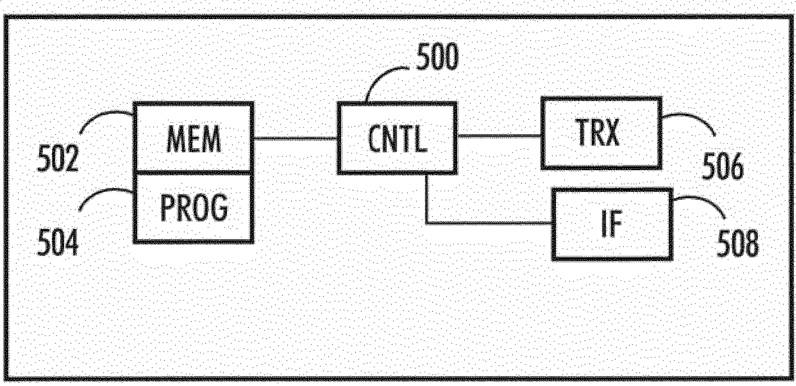
500
MEM
CNTL
TRX
PROG
IF
502
504
506
508

FIG. 5A

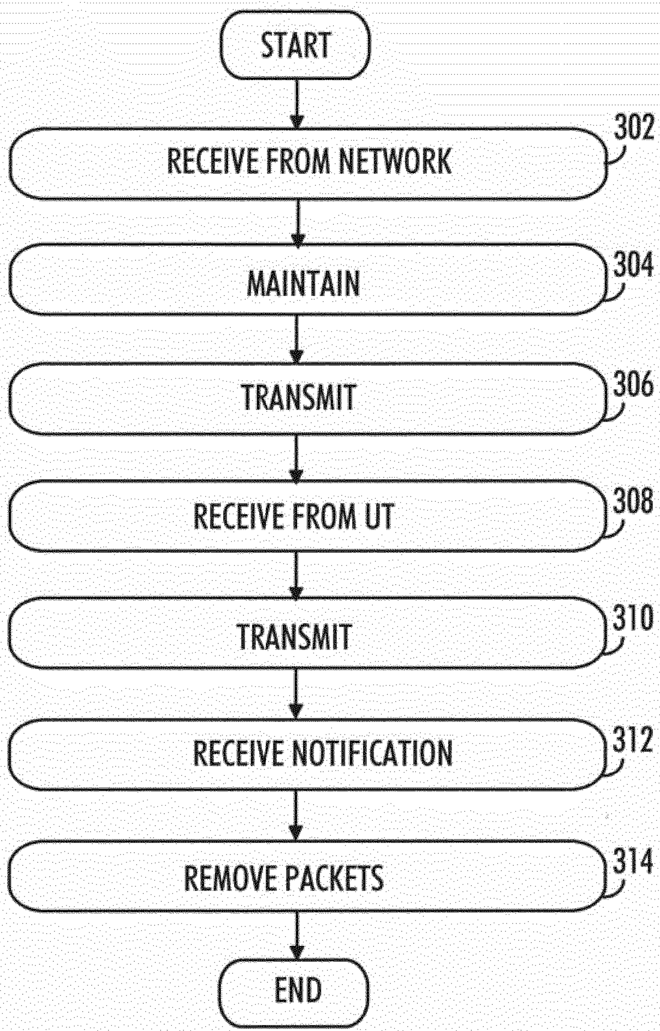
START
RECEIVE FROM NETWORK
302
MAINTAIN
304
TRANSMIT
306
RECEIVE FROM UT
308
TRANSMIT
310
RECEIVE NOTIFICATION
312
REMOVE PACKETS
314
END

FIG. 3

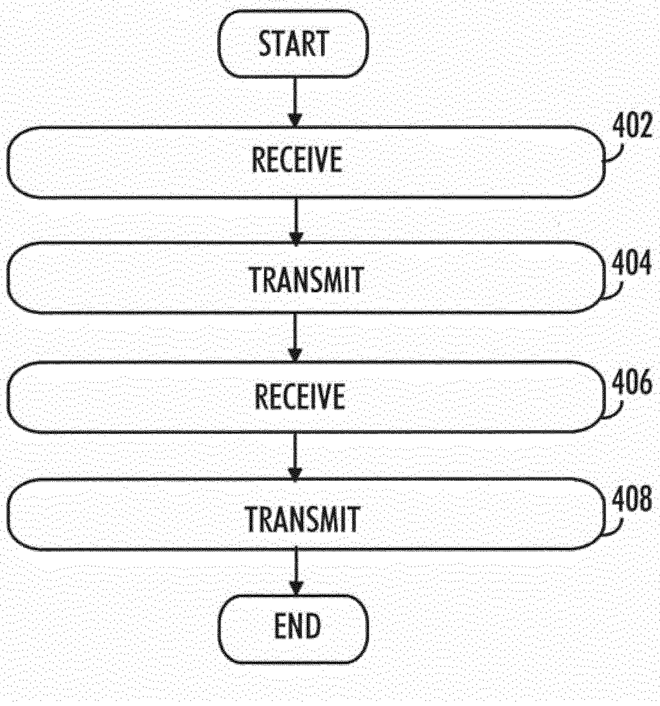
START
RECEIVE
402
TRANSMIT
404
RECEIVE
406
TRANSMIT
408
END

FIG. 4

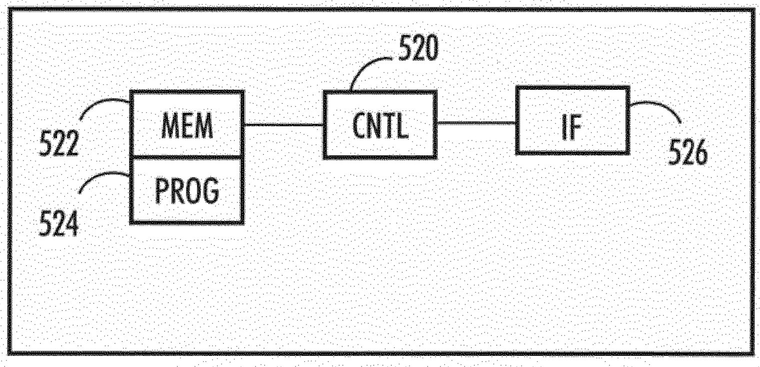


FIG. 5B

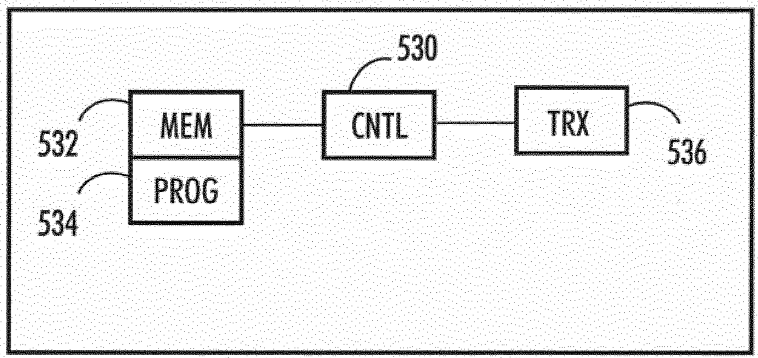


FIG. 5C

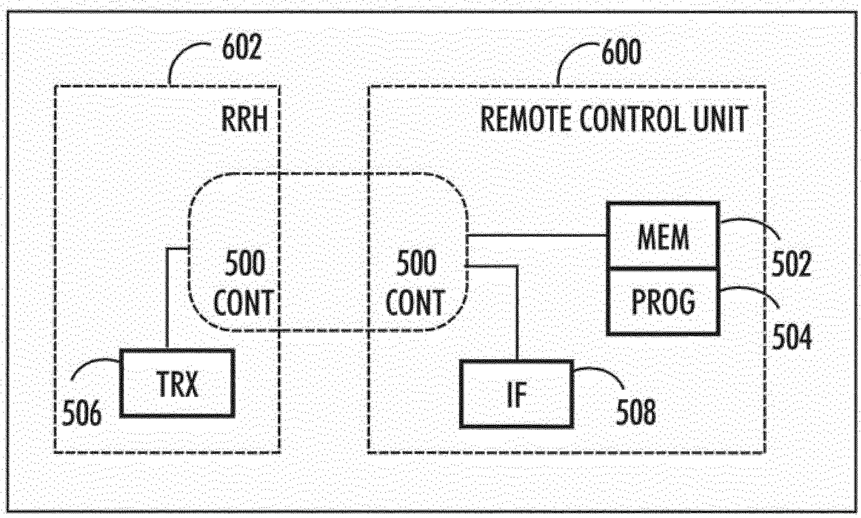


FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *3GPP TDoc R2-093735,* 22 June 2009